# EUROPÄISCHE PATENTSCHRIFT

(11) **EP 3 403 542 B1**
(45) Veröffentlichungstag und Bekanntmachung des Hinweises auf die Patenterteilung: **01.03.2023**
(21) Anmeldenummer: 18172178.8
(22) Anmeldetag: 14.05.2018
(51) Int. Cl.: A47C 31/12, A47C 7/72, A47C 1/024, A47C 1/032, B60N 2/00, B60N 2/02

(54) **SITZEINRICHTUNG MIT SITZPARAMETERERKENNUNG**
SEAT DEVICE WITH SEAT PARAMETER DETECTION
DISPOSITIF DE SIÈGE À RECONNAISSANCE DE PARAMÈTRES DE SIÈGE

(30) Priorität: 16.05.2017 DE 102017208242
(43) Veröffentlichungstag der Anmeldung: 21.11.2018
(73) Patentinhaber: Stabilus GmbH, 56070 Koblenz (DE)
(72) Erfinder: Löhken, Lars, 53545 Linz am Rhein (DE); Müller, Markus, 56072 Koblenz (DE); Häring, Fred, 56567 Neuwied (DE); Probst, Ulrich, 56204 Hillscheid (DE); Piroth, Raphael, 65321 Heidenrod (DE)
(74) Vertreter: Weickmann & Weickmann PartmbB

(56) Entgegenhaltungen:
- US-A1- 2009 273 441
- US-A1- 2015 366 350
- L. Martins ET AL: "Intelligent Chair Sensor - Classification and Correction of Sitting Posture" In: "IFMBE proceedings (International Federation for Medical and Biological Engineering)", 28. September 2013 (2013-09-28), Springer, DE, XP055500103, ISSN: 1680-0737 Bd. 41, Seiten 1489-1492, DOI: 10.1007/978-3-319-00846-2_368, * Seite 1490 - Seite 1492; Abbildungen 1-3 *

## Beschreibung

Die vorliegende Erfindung betrifft eine elektrisch verstellbare Sitzeinrichtung umfassend: wenigstens ein Sensorelement, einen Prozessor, eine Speichereinheit und wenigstens einen elektromechanischen Aktuator, wobei das wenigstens eine Sensorelement dafür eingerichtet ist, vorbestimmte Sitzparameterdaten einer auf der Sitzeinrichtung Platz nehmenden Person zu erfassen und an den Prozessor zu übermitteln,. Ferner betrifft die vorliegende Erfindung ein Verfahren zum Einstellen einer elektrisch verstellbaren Sitzeinrichtung, umfassend die folgenden Schritte: Erfassen vorbestimmter Sitzparameterdaten einer auf der Sitzeinrichtung Platz nehmenden Person durch wenigstens ein Sensorelement und Übermitteln der Sitzparameterdaten an einen Prozessor durch das wenigstens eine Sensorelement.

Die US 2015/366350 A1, die Veröffentlichung L. Martins ET AL: "Intelligent Chair Sensor - Classification and Correction of Sitting Posture" und die US 2009/273441 A1 offenbaren eine elektrisch verstellbare Sitzeinrichtung, umfassend: wenigstens ein Sensorelement, einen Prozessor, eine Speichereinheit und wenigstens einen elektromechanischen Aktuator, wobei das wenigstens eine Sensorelement dafür eingerichtet ist, vorbestimmte Sitzparameterdaten einer auf der Sitzeinrichtung Platz nehmenden Person zu erfassen und an den Prozessor zu übermitteln, um die Sitzeinrichtung einzustellen.

Bei der Sitzeinstellung, insbesondere von Bürostühlen, aber auch generell von anderen Sitzanordnungen oder -einrichtungen, ist es gesundheitlich von großem Vorteil, eine ergonomische Position für eine auf dem Sitz oder Stuhl Platz nehmende Person einzustellen. Dabei ist es aus vielerlei Gründen wesentlich einfacher, eine falsche als eine richtige bzw. ergonomisch sinnvolle Einstellung vorzunehmen.

Konventionelle Bürostühle lassen sich über verschiedene Dreh- und Hebelmechanismen, die in der Regel unter der Sitzfläche angeordnet sind, manuell verstellen. Über diese Verstelleinrichtungen lassen sich je nach Ausführungsmodell die Sitzhöhe, die Rückenlehnenneigung, die Rückenlehnenvorspannung, die Sitzflächenneigung, die Armlehnenhöhe und noch weitere Einstellungen vornehmen.

Bereits bekannte Sitzanordnungen aus dem Automotive-Bereich lassen sich elektrisch verstellen und auch auf einen bestimmten Benutzer personalisieren.

Die Einstellung von Bedien- und Anzeigeelementen, wie z. B. Lenkräder, Steuerhorn/-knüppel und Instrumententafel, erfolgt zumeist mechanisch, in manchen Fällen elektrisch. In wenigen Fällen stellen sich diese per Nutzererkennung (z. B. über den Zündschlüssel) auf die Standardeinstellung des Benutzers ein.

Da die Verstellhebel meistens unter dem Stuhl angeordnet sind, ist es für die Benutzer äußerst unkomfortabel, den richtigen Hebel für die gewünschte Verstellung zu finden. Zudem bedingt diese Art der Verstellung eine Zwangshaltung des Benutzers, die es ihm nicht erlaubt, eine unmittelbare Rückmeldung zu bekommen, ob die gewählte Einstellung optimal oder angenehm ist. Somit ist iteratives, unangenehmes und unter Umständen zeitraubendes Einstellen sowie Nachjustieren notwendig. Diesem Umstand zufolge werden häufig unergonomische Einstellungen hingenommen.

Des Weiteren ist den meisten Nutzern nicht bekannt, welche Stuhleinstellung ergonomisch vorteilhaft ist, was zu ungünstigen Einstellungen führen kann. Außerdem nutzen bei modernen Arbeitsplätzen oder z.B. bei Konferenzräumen häufig verschiedene Benutzer ein und denselben Stuhl, was eine häufige Anpassung der Einstellung mit sich bringt.

Elektrische Automotive-Sitzanordnungen haben selbst mit Memory-Funktion nicht die Möglichkeit, auf einen unbekannten Benutzer zu reagieren, was bei Poolfahrzeugen oder Car-Sharing-Diensten von Vorteil wäre. Zudem können diese Systeme keine nutzerspezifische Hilfestellung für eine möglichst ergonomische Einstellung geben.

Vor diesem Hintergrund ist es eine Aufgabe der vorliegenden Erfindung, eine elektrisch verstellbare Sitzeinrichtung sowie ein Verfahren zum Einstellen einer elektrisch verstellbaren Sitzeinrichtung bereitzustellen, wobei automatisch die richtige Sitzposition, insbesondere hinsichtlich Ergonomie, eingestellt wird, wenn eine Person auf der Sitzeinrichtung Platz nimmt.

Diese Aufgabe wird durch eine elektrisch verstellbare Sitzeinrichtung gemäß Anspruch 1 gelöst.

Mittels der in der Sitzeinrichtung angeordneten Aktorik (wenigstens ein elektromechanischer Aktuator) kann also automatisch eine für den Benutzer der Sitzeinrichtung ergonomische Sitzeinstellung vorgenommen werden. Da, wie bereits erwähnt, die Bedienung herkömmlicher Sitzverstellsysteme meist äußerst unkomfortabel ist und es den meisten Benutzern auch nicht bekannt ist, welche Sitzeinstellungen ergonomisch vorteilhaft sind, sorgt der Aufbau der Sitzeinrichtung der vorliegenden Erfindung für ein gesünderes Sitzen des Benutzers durch eine ergonomische Sitzposition, für längere pausenfreie Verweilzeiten durch geringere Ermüdung der Benutzer sowie eine höhere Verfügbarkeit der Benutzer aufgrund geringer, durch Haltungsschäden verursachter Ausfälle, insbesondere am Arbeitsplatz. Auf diese Weise wird insbesondere in frequentierten Bereichen, wie Besprechungsräumen, Wartehallen und Lounges, jedem Nutzer unmittelbar eine optimale Sitzgelegenheit geboten. Ebenso positiv lässt sich die Sitzeinrichtung an Arbeitsplätzen mit extrem hoher Verweilzeit und damit hohen ergonomischen Anforderungen (Fahrersitze von Nutzfahrzeugen, Pilotensitze oder Büromöbel) sehr nutzbringend anwenden.

Vorzugsweise kann der wenigstens eine elektromechanische Aktuator wenigstens einen Haltungsparameter der Sitzeinrichtung regulieren. Haltungsparameter der Sitzeinrichtung können einer oder mehrere der folgenden Parameter sein: Sitzhöhe, Rückenlehnenneigung, Rückenlehnenvorspannung, Sitzflächenneigung, Sitzflächentiefe oder Armlehnenhöhe. All diese Haltungsparameter sorgen, wenn richtig eingestellt, für eine ergonomische Sitzposition für den Benutzer und, damit verbunden, für ein gesünderes Sitzen.

Die aus den Sitzparameterdaten ermittelten Personenparameterdaten der

Person sind erfindungsgemäß ausgewählt aus Größe, Gewicht und Geschlecht der Person. Mittels dieser Daten ist es möglich, eine optimale Sitzeinstellung für die Person zu errechnen und ein ergonomisches, gesundes Sitzen auf der Sitzeinrichtung zu gewährleisten.

In einer besonders bevorzugten Ausführungsform der vorliegenden Erfindung kann die Sitzeinrichtung ein Bürostuhl sein. Die oben formulierten Probleme des Stands der Technik treten besonders häufig im Büroalltag auf, weshalb eine Anwendung der Sitzeinrichtung der vorliegenden Erfindung als Bürostuhl als besonders vorteilhaft angesehen wird. Darüber hinaus gibt es neben der Anwendung als Bürostuhl noch viele weitere Anwendungsbereiche für die Sitzeinrichtung der vorliegenden Erfindung (z.B. Automotive).

Gemäß einer bevorzugten Ausführungsform der vorliegenden Erfindung kann die Sitzeinrichtung eine Mehrzahl von Sensorelementen umfassen, welche insbesondere in einer Sitzfläche und/oder einer Rückenlehne der Sitzeinrichtung angeordnet sein können. Die Sensorelemente in der Sitzfläche und der Rückenlehne der Sitzeinrichtung können maßgebliche Kenngrößen zur Bestimmung einer ergonomischen Sitzposition aufzeichnen und an den Prozessor weiterleiten. Aus den von dem Prozessor ausgewerteten Messdaten lassen sich dann Personenparameterdaten, wie z.B. Größe, Gewicht und Geschlecht des Benutzers, ableiten, womit sich eine vorteilhafte Stuhleinstellung errechnen lässt.

In einer weiteren vorteilhaften Ausführungsform kann der Prozessor ferner dafür eingerichtet sein, Einstellungen von im Umfeld der Sitzeinrichtung angeordneten Einrichtungen zu steuern. Solche Einrichtungen können z.B. Möbel und Bedien- oder Anzeigeelemente im Arbeitsumfeld sein, so dass sich der jeweilige gesamte Arbeitsplatz automatisch ergonomisch auf den jeweiligen Nutzer einstellen kann, wie z.B. auf Nutzfahrzeugführer, Automobilführer und -mitfahrer, sowie Piloten, Arbeiter usw. Ferner können Möbel, Bedien- oder Anzeigeelemente, insbesondere im Arbeitsumfeld von gesundheitlichen, ergonomischen und Komfortnutzen sein, welche sich auf die Benutzer und deren Sitzposition anpassen können. Daher wird daran gedacht, diese Gegenstände in einem Ausführungsbeispiel der vorliegenden Erfindung mit der Stuhleinstellung zu vernetzen und so auch deren Einstellung zu automatisieren.

Es wird weiterhin besonders daran gedacht, dass eine Kommunikation sowie eine Befehlssendung zwischen der Sitzeinrichtung und anderen, um diese angeordneten, verstellbaren Gegenstände möglich sein kann (z.B. Instrumententafel, Tisch, Bildschirm oder Bedieninstrumente). Mögliche Anwendungsbereiche für diese Ausführungsform sind das Büro, wobei beispielsweise die Höheneinstellung eines Schreibtischs sowie die Höhen- und Entfernungseinstellung eines Bildschirms verstellt werden können, die Fahrgastzelle, wobei eine Höhen- und Neigungseinstellung des Lenkrads eingestellt werden kann, oder auch das Flugzeug, wobei verschiedene Positionseinstellungen für Instrumente vorgenommen werden können.

Außerdem wird die oben formulierte Erfindungsaufgabe durch ein Verfahren zum Einstellen einer elektrisch verstellbaren Sitzeinrichtung gemäß Anspruch 6 gelöst.

Durch dieses Verfahren wird es möglich, mittels der in der Sitzeinrichtung angeordneten Aktorik (wenigstens ein elektromechanischer Aktuator) automatisch eine für den Benutzer der Sitzeinrichtung ergonomische Sitzeinstellung vorzunehmen. Da, wie bereits erwähnt, die Bedienung herkömmlicher Sitzverstellsysteme meist äußerst unkomfortabel ist und es den meisten Benutzern auch nicht bekannt ist, welche Sitzeinstellungen ergonomisch vorteilhaft sind, sorgt das Verfahren zum Einstellen der Sitzeinrichtung für ein gesünderes Sitzen des Benutzers durch eine ergonomische Sitzposition, für längere pausenfreie Verweilzeiten durch geringere Ermüdung der Benutzer sowie eine höhere Verfügbarkeit der Benutzer aufgrund geringer, durch Haltungsschäden verursachter Ausfälle, insbesondere am Arbeitsplatz. Auch können auf diese Weise insbesondere in frequentierten Bereichen, wie Besprechungsräumen, Wartehallen und Lounges, jedem Nutzer unmittelbar eine optimale Sitzgelegenheit geboten werden. Ebenso positiv lässt sich das Verfahren an Arbeitsplätzen mit extrem hoher Verweilzeit und damit hohen ergonomischen Anforderungen (Fahrersitze von Nutzfahrzeugen, Pilotensitze oder Büromöbel) sehr nutzbringend anwenden.

Das Lernsystem ist ein Maschinenlernalgorithmus, mittels welchem die elektrische Verstellung der Sitzeinrichtung gesteuert werden kann. Es ist anzumerken, dass der Lernprozess bzw. der wiederholte Lernvorgang mit der Sitzeinrichtung, umfassend das wenigstens eine Sensorelement, den Prozessor, die Speichereinheit und den elektromechanischen Aktuator, aus den Verfahrensschritten a) bis e) durchgeführt werden kann - alternativ jedoch auch mit einer anderen, vorteilhaft aber nicht notwendigerweise artgleichen, Sitzeinrichtung durchgeführt werden kann, welche beispielsweise mit einem externen Prozessor in Verbindung stehen kann.

Vorzugsweise kann der wenigstens eine elektromechanischen Aktuator wenigstens einen Haltungsparameter der Sitzeinrichtung regulieren. Haltungsparameter der Sitzeinrichtung können beispielsweise die Sitzhöhe, die Rückenlehnenneigung, die Rückenlehnenvorspannung, die Sitzflächenneigung oder die Armlehnenhöhe sein. All diese Haltungsparameter sorgen, wenn richtig eingestellt, für eine ergonomische Sitzposition für den Benutzer und, damit verbunden, für ein gesünderes Sitzen.

Die aus den Sitzparameterdaten ermittelten Personenparameterdaten der Person sind erfindungsgemäß ausgewählt aus Größe, Gewicht und Geschlecht der Person. Mittels dieser Daten ist es möglich, eine optimale Sitzeinstellung für die Person zu errechnen und ein ergonomisches, gesundes Sitzen auf der Sitzeinrichtung zu gewährleisten.

In einer besonders bevorzugten Ausführungsform der vorliegenden Erfindung kann die Sitzeinrichtung ein Bürostuhl sein. Die oben formulierten Probleme des Stands der Technik treten besonders häufig im Büroalltag auf, weshalb eine Anwendung der Sitzeinrichtung der vorliegenden Erfindung als Bürostuhl als besonders vorteilhaft angesehen wird. Darüber hinaus gibt es neben der Anwendung als Bürostuhl noch viele weitere Anwendungsbereiche für die Sitzeinrichtung der vorliegenden Erfindung (z. B. Automotive).

Gemäß einer bevorzugten Ausführungsform der vorliegenden Erfindung kann die Sitzeinrichtung eine Mehrzahl von Sensorelementen umfassen, welche insbesondere in einer Sitzfläche und/oder einer Rückenlehne der Sitzeinrichtung angeordnet sein können. Die Sensorelemente in der Sitzfläche und der Rückenlehne der Sitzeinrichtung können maßgebliche Kenngrößen zur Bestimmung einer ergonomischen Sitzposition aufzeichnen und an den Prozessor weiterleiten. Aus den von dem Prozessor ausgewerteten Messdaten lassen sich dann Personenparameterdaten Größe, Gewicht oder Geschlecht des Benutzers ableiten, womit sich eine vorteilhafte Stuhleinstellung errechnen lässt.

In einer weiteren vorteilhaften Ausführungsform kann der Prozessor Einstellungen von im Umfeld der Sitzeinrichtung angeordneten Einrichtungen steuern. Solche Einrichtungen können z. B. Möbel und Bedien- oder Anzeigeelemente im Arbeitsumfeld sein, so dass sich der jeweilige gesamte Arbeitsplatz automatisch ergonomisch auf den jeweiligen Nutzer einstellen kann, wie z. B. auf Nutzfahrzeugführer, Automobilführer und -mitfahrer, sowie Piloten, Arbeiter usw. Ferner können Möbel, Bedien- oder Anzeigeelemente, insbesondere im Arbeitsumfeld von gesundheitlichen, ergonomischen und Komfortnutzen sein, welche sich auf die Benutzer und deren Sitzposition anpassen können. Daher wird daran gedacht, diese Gegenstände in einem Ausführungsbeispiel der vorliegenden Erfindung mit der Stuhleinstellung zu vernetzen und so auch deren Einstellung automatisieren. Darüber hinaus kann über den Algorithmus mit Hilfe der Erkenntnisse aus der Sensorik im Sitz auch die Einstellung von Möbel, Bedien- oder Anzeigeelemente im Arbeitsumfeld mit eingebunden werden, so dass sich der jeweilige Arbeitsplatz automatisch ergonomisch auf den jeweiligen Nutzer einstellen kann.

Die Erfindung wird nachfolgend anhand bevorzugter Ausführungsbeispiele unter Bezugnahme auf die beigefügte Zeichnung näher erläutert, wobei
Figur 1 ein Blockdiagramm ist, welches schematisch den Aufbau einer Sitzeinrichtung gemäß einer Ausführungsform der vorliegenden Erfindung zeigt, und
Figur 2 ein Blockdiagramm ist, welches schematisch die Durchführung eines Lernprozesses mit einer Mehrzahl von Probanden zeigt, bei welchem wiederholt ein Lernvorgang jeweils einem der Mehrzahl von Probanden durchgeführt wird.

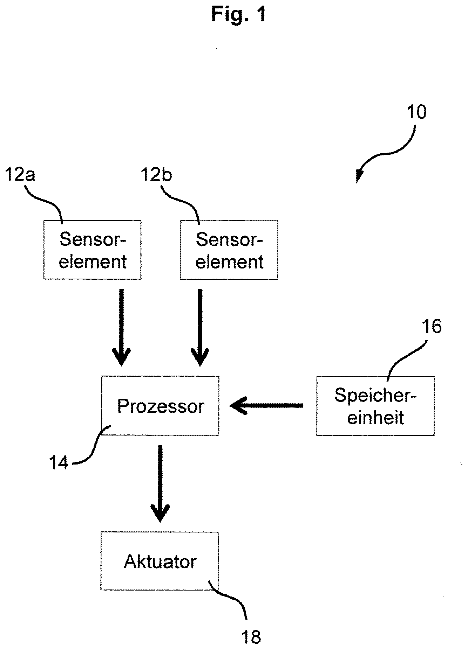

Das in Figur 1 dargestellte Blockdiagramm zeigt schematisch den Aufbau einer elektrisch verstellbaren Sitzeinrichtung 10. Die Sitzeinrichtung umfasst in dem in Figur 1 dargestellten Ausführungsbeispiel zwei Sensorelemente 12a und 12b. Beispielsweise kann ein Sensorelement 12a in einer nicht dargestellten Sitzfläche der Sitzeinrichtung 10 und das andere Sensorelement 12b in einer nicht dargestellten Rückenlehne der Sitzeinrichtung 10 angeordnet sein. Die Sensorelemente 12a, 12b erfassen vorbestimmte Sitzparameterdaten einer auf der Sitzeinrichtung 10 platznehmenden Person. Weiterhin umfasst die Sitzeinrichtung 10 einen Prozessor 14, an welchem die Sensorelemente 12a, 12b die Sitzparameterdaten der Person übermitteln. Der Prozessor 14 ermittelt aus den Sitzparameterdaten Personenparameterdaten der Person, nämlich Größe, Gewicht und Geschlecht der Person. Die Sitzeinrichtung 10 umfasst ferner eine Speichereinheit 16, aus welcher der Prozessor 14 den Personenparameterdaten zugeordnete Steuerungsdaten extrahiert. Zudem ist ein elektromechanischer Aktuator 18 vorgesehen, welchen der Prozessor 14 auf Grundlage der aus der Speichereinheit 16 extrahierten Steuerungsdaten steuert.

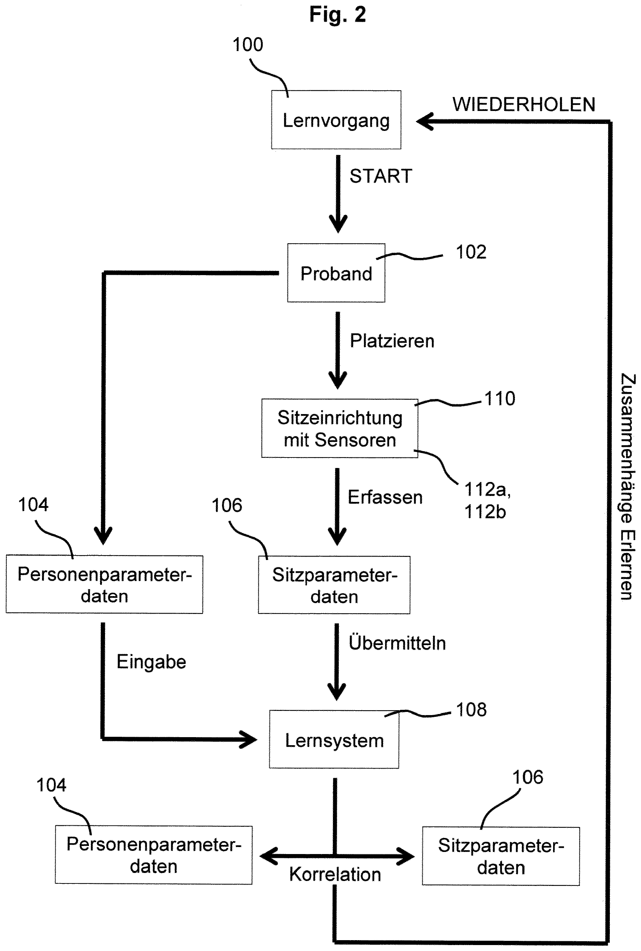

Der in Figur 2 mittels eines Blockdiagramms dargestellte Lernprozess ermöglicht dem Prozessor 14 der Sitzeinrichtung 10 aus Figur 1 die automatische Erkennung der Personenparameterdaten der auf der Sitzeinrichtung 10 Platz nehmenden Person. Der Lernprozess wird dabei üblicherweise nicht an dem endgültigen Einsatzort der Sitzeinrichtung (beispielsweise Büro oder Automobil), sondern an einem anderen Ort, wie etwa einer Fabrik oder einem Labor unter Versuchsbedingungen, vielmalig durchgeführt. Die erhaltenen Ergebnisse werden nach Beendigung des Versuchs/Lernprozesses in die Software des Prozessors 14 der Sitzeinrichtung 10 eingespielt.

Der Lernprozess umfasst eine Mehrzahl sich wiederholender Lernvorgänge 100 mit einer Mehrzahl von Probanden. Bei jedem Lernvorgang 100 wird jeweils ein Proband 102 auf einer Sitzeinrichtung 110 platziert, welche auch die Sitzeinrichtung 10 aus Figur 1 sein kann, jedoch vorzugsweise eine andere, artgleiche Sitzeinrichtung oder ein Prototyp einer artgleichen Sitzeinrichtung ist. So kann beispielsweise erreicht werden, dass schon vor einer etwaigen Massenfertigung eines Sitzmöbels oder dergleichen die optimalen Sitzeinstellungen für verschiedene Personengruppen ermittelt werden können.

Die Sitzeinrichtung ist mit Sensoren 112a, 112b ausgerüstet, welche wiederrum die Sensorelemente 12a und 12b aus Figur 1 sein können, jedoch vorteilhafterweise artgleiche oder zumindest ähnliche Sensorelemente sind. Entweder bevor oder nachdem sich der Proband 102 auf die Sitzeinrichtung 110 gesetzt hat, werden vorbestimmte Personenparameterdaten 104 des Probanden 102 in ein Lernsystem 108 eingegeben. Die Personenparameterdaten 104 sind erfindungsgemäß ausgewählt aus Größe, Gewicht und Geschlecht des Probanden 102.

Die Sensoren 112a und 112b erfassen vorbestimmte Sitzparameterdaten 106 des Probanden 102 und übermitteln diese an das Lernsystem 108. Anschließend stellt das Lernsystem 108 eine Korrelation zwischen den erfassten Sitzparameterdaten 106 und den eingegeben Personenparameterdaten 104 des Probanden 102 her, worauf der Lernvorgang 100 mit dem nächsten Probanden wiederholt wird. Durch eine Vielzahl von Wiederholungen erlernt das Lernsystem 108 die Zusammenhänge zwischen Personenparameterdaten 104 sowie Sitzparameterdaten 106 - solange, bis das Lernsystem 108 durch einen Lernalgorithmus anhand der von den Sensoren 112a, 112b erfassten Sitzparameterdaten 106 zuverlässig eine Aussage treffen kann, welche Personenparameterdaten 104 der auf der Sitzeinrichtung 110 Platz nehmende Proband 102 aufweist, ohne dass dessen entsprechende Personenparameterdaten 104 vorher in das Lernsystem eingegeben wurden.

Dieser erlernte Algorithmus wird dann nach Beendigung des Lernprozesses einem Rechenmittel eines massengefertigten Produkts, beispielsweise dem Prozessor 14 der Sitzeinrichtung 10 aus Figur 1, angeeignet, wodurch dieser die Personenparameterdaten einer Person aus erfassten Sitzparameterdaten ermitteln kann, ohne dass eine vorherige Eingabe notwendig ist und eine Sitzeinrichtung oder dergleichen für verschiedene Personen automatisch die ergonomisch richtige Sitzeinstellung vornehmen kann.

Es ist anzumerken, dass die Erfindung nicht auf die beschriebenen Ausführungsbeispiele beschränkt ist und im Sinne der Erfindung auch ein anderer Aufbau der Sitzeinrichtung 10 oder eine andere Abfolge der Verfahrensschritte des Lernvorgangs 100 möglich sind. Insbesondere die Anordnung und Anzahl der Sensorelemente 12a, 12b; 112a, 112b sowie des wenigstens einen Aktuators 18 können variieren.

## Patentansprüche

1. Elektrisch verstellbare Sitzeinrichtung (10), umfassend:
- wenigstens ein Sensorelement (12a, 12b),
- einen Prozessor (14),
- eine Speichereinheit (16) und
- wenigstens einen elektromechanischen Aktuator (18),
wobei das wenigstens eine Sensorelement (12a, 12b) dafür eingerichtet ist, vorbestimmte Sitzparameterdaten einer auf der Sitzeinrichtung (10) Platz nehmenden Person zu erfassen und an den Prozessor (14) zu übermitteln,
wobei der Prozessor (14) dafür eingerichtet ist,
- aus den Sitzparameterdaten Personenparameterdaten der Person zu ermitteln, wobei die Personenparameterdaten der Person ausgewählt sind aus Größe, Gewicht und Geschlecht der Person,
- den Personenparameterdaten zugeordnete Steuerungsdaten aus der Speichereinheit (16) zu extrahieren, und
- auf Grundlage der Steuerungsdaten den wenigstens einen elektromechanischen Aktuator (18) zu steuern.

2. Sitzeinrichtung (10) nach Anspruch 1, wobei der wenigstens eine elektromechanische Aktuator (18) wenigstens einen Haltungsparameter der Sitzeinrichtung (10) reguliert.

3. Sitzeinrichtung (10) nach einem der vorhergehenden Ansprüche, wobei die Sitzeinrichtung (10) ein Bürostuhl ist.

4. Sitzeinrichtung (10) nach einem der vorhergehenden Ansprüche, wobei die Sitzeinrichtung (10) eine Mehrzahl von Sensorelementen (12a, 12b) umfasst, welche insbesondere in einer Sitzfläche und/oder einer Rückenlehne der Sitzeinrichtung (10) angeordnet sind.

5. Sitzeinrichtung (10) nach einem der vorhergehenden Ansprüche, wobei der Prozessor (14) ferner dafür eingerichtet ist, Einstellungen von im Umfeld der Sitzeinrichtung (10) angeordneten Einrichtungen zu steuern.

6. Verfahren zum Einstellen einer elektrisch verstellbaren Sitzeinrichtung (10), umfassend die folgenden Schritte:
a) Erfassen vorbestimmter Sitzparameterdaten einer auf der Sitzeinrichtung (10) Platz nehmenden Person durch wenigstens ein Sensorelement (12a, 12b)
b) Übermitteln der Sitzparameterdaten an einen Prozessor (14) durch das wenigstens eine Sensorelement (12a, 12b),
c) Ermitteln von Personenparameterdaten der Person aus den Sitzparameterdaten durch den Prozessor (14), wobei die Personenparameterdaten der Person ausgewählt sind aus Größe, Gewicht und Geschlecht der Person,
d) Extrahieren von den Personenparameterdaten zugeordneten Steuerungsdaten aus einer Speichereinheit (16) durch den Prozessor (14) und
e) Steuern wenigstens eines elektromechanischen Aktuators (18) auf Grundlage der Steuerungsdaten durch den Prozessor (14), wobei das Verfahren vor dem Schritt a) ferner den folgenden Schritt umfasst:
- Durchführen eines Lernprozesses, umfassend ein wiederholtes Durchführen eines Lernvorgangs (100) mit einer Mehrzahl von Probanden (102), wobei bei jedem Lernvorgang (100) mit einem der Mehrzahl von Probanden (102) die folgenden Schritte durchgeführt werden:
• Platzieren des Probanden (102) auf einer Sitzeinrichtung (110),
• Eingeben vorbestimmter Personenparameterdaten (104) des Probanden (102) in ein Lernsystem (108), wobei die aus den Sitzparameterdaten ermittelten Personenparameterdaten ausgewählt sind aus Größe, Gewicht und Geschlecht der Person,
• Erfassen vorbestimmter Sitzparameterdaten (106) des Probanden (102) durch wenigstens ein Sensorelement (112a, 112b),
• Übermitteln der Sitzparameterdaten (106) an das Lernsystem (108) und
• Herstellen einer Korrelation zwischen Sitzparameterdaten (106) und Personenparameterdaten (104) des Probanden (102) durch das Lernsystem (108),
wobei der Prozessor (14) im Schritt c) die Personenparameterdaten der Person unter Verwendung des Lernsystems (108) aus den Sitzparameterdaten ermittelt.

7. Verfahren nach Anspruch 6, wobei der wenigstens eine elektromechanische Aktuator (18) wenigstens einen Haltungsparameter der Sitzeinrichtung (10) reguliert.

8. Verfahren nach einem der Ansprüche 6 und 7, wobei die Sitzeinrichtung (10) ein Bürostuhl ist.

9. Verfahren nach einem der Ansprüche 6 bis 8, wobei die Sitzeinrichtung (10) eine Mehrzahl von Sensorelementen (12a, 12b) umfasst, welche insbesondere in einer Sitzfläche und/oder einer Rückenlehne der Sitzeinrichtung (10) angeordnet sind.

10. Verfahren nach einem der Ansprüche 6 bis 9, wobei der Prozessor (14) ferner dafür eingerichtet ist, Einstellungen von im Umfeld der Sitzeinrichtung (10) angeordneten Einrichtungen zu steuern.

## Claims

1. Electrically adjustable seating device (10), comprising:
- at least one sensor element (12a, 12b),
- a processor (14),
- a memory unit (16), and
- at least one electromechanical actuator (18),
the at least one sensor element (12a, 12b) being designed to detect predetermined seating parameter data relating to a person sitting on the seating device (10) and to transmit said data to the processor (14),
wherein the processor (14) is designed to
- determine person parameter data, relating to the person, from the seating parameter data, wherein the person parameter data are selected from size, weight and sex of the person,
- extract control data, which are associated with the person parameter data, from the memory unit (16), and
- control the at least one electromechanical actuator (18) on the basis of the control data.

2. Seating device (10) according to claim 1, wherein the at least one electromechanical actuator (18) controls at least one position parameter of the seating device (10).

3. Seating device (10) according to any of the preceding claims, wherein the seating device (10) is an office chair.

4. Seating device (10) according to any of the preceding claims, wherein the seating device (10) comprises a plurality of sensor elements (12a, 12b), which are arranged in a seat and/or a backrest of the seating device (10) in particular.

5. Seating device (10) according to any of the preceding claims, wherein the processor (14) is also designed to control settings of devices arranged in the area around the seating device (10).

6. Method for setting an electrically adjustable seating device (10), comprising the following steps:
a) detecting predetermined seating parameter data relating to a person sitting on the seating device (10) by means of at least one sensor element (12a, 12b), and
b) transmitting the seating parameter data to a processor (14) by means of the at least one sensor element (12a, 12b),
c) determining, from the seating parameter data, person parameter data relating to the person by means of the processor (14), wherein the person parameter data are selected from size, weight and sex of the person,
d) extracting control data, which are associated with the person parameter data, from a memory unit (16) by means of the processor (14), and
e) controlling at least one electromechanical actuator (18) on the basis of the control data by means of the processor (14)
wherein the method prior to step a) further comprises the step of:
- carrying out a learning process, which involves repeatedly carrying out a learning procedure (100) using a plurality of experimentees (102), wherein, in each learning procedure (100), the following steps are carried out using one of the plurality of experimentees (102):
- placing the experimentee (102) on a seating device (110),
- entering predetermined person parameters (104) relating to the experimentee (102) into a learning system (108), wherein the person parameter data derived from the seating parameter data are selected from size, weight and sex of the person,
- detecting predetermined seating parameter data (106) relating to the experimentee (102) by means of at least one sensor element (112a, 112b),
- transmitting the seating parameter data (106) to the learning system (108), and
- establishing a correlation between the seating parameter data (106) and the person parameter data (104) relating to the experimentee (102) by means of the learning system (108),
wherein, the processor (14) determines, in step c), the person parameter data, which relate to the person, from the seating parameter data using the learning system (108).

7. Method according to claim 6, wherein the at least one electromechanical actuator (18) controls at least one position parameter of the seating device (10).

8. Method according to any of claims 6 and 7, wherein the seating device (10) is an office chair.

9. Method according to any of claims 6 to 8, wherein the seating device (10) comprises a plurality of sensor elements (12a, 12b), which are arranged in a seat and/or a backrest of the seating device (10) in particular.

10. Method according to any of claims 6 to 9, wherein the processor (14) is also designed to control settings of devices arranged in the area around the seating device (10).

## Revendications

1. Dispositif d'assise (10) réglable électriquement, comprenant :
- au moins un élément de capteur (12a, 12b),
- un processeur (14),
- une unité de mémoire (16) et
- au moins un actionneur électromécanique (18),
dans lequel ledit au moins un élément de capteur (12a, 12b) est conçu pour détecter des données de paramètres de siège prédéterminées d'une personne s'asseyant sur le dispositif d'assise (10) et pour les transmettre au processeur (14), dans lequel le processeur (14) est conçu pour,
- déterminer, à partir des données de paramètres d'assise, des données de paramètres personnels de la personne, dans lequel les données de paramètres personnels de la personne sont choisies parmi la taille, le poids et le sexe de la personne,
- extraire de l'unité de mémoire (16) des données de commande associées aux données de paramètres de la personne, et
- commander ledit au moins un actionneur électromécanique (18) sur la base des données de commande.

2. Dispositif d'assise (10) selon la revendication 1, dans lequel ledit au moins un actionneur électromécanique (18) régule au moins un paramètre de posture du dispositif d'assise (10).

3. Dispositif d'assise (10) selon l'une des revendications précédentes,
dans lequel le dispositif d'assise (10) est une chaise de bureau.

4. Dispositif d'assise (10) selon l'une des revendications précédentes,
dans lequel le dispositif d'assise (10) comprend une pluralité d'éléments de capteur (12a, 12b) disposés notamment dans une assise et/ou un dossier du dispositif d'assise (10).

5. Dispositif d'assise (10) selon l'une des revendications précédentes,
dans lequel le processeur (14) est en outre agencé pour commander des réglages de dispositifs disposés dans l'environnement du dispositif d'assise (10).

6. Procédé de réglage d'un dispositif d'assise (10) à réglage électrique, comprenant les étapes suivantes :
a) détecter des données de paramètres de siège prédéterminées d'une personne s'asseyant sur le dispositif d'assise (10) par au moins un élément de capteur (12a, 12b),
b) transmettre les données de paramètres de siège à un processeur (14) au moyen dudit au moins un élément de capteur (12a, 12b),
c) déterminer des données de paramètres personnels de la personne à partir des données de paramètres de siège au moyen du processeur (14), dans lequel les données de paramètres personnels de la personne sont choisies parmi la taille, le poids et le sexe de la personne,
d) extraire des données de commande associées aux données de paramètres de la personne à partir d'une unité de mémoire (16) au moyen du processeur (14), et
e) commander au moins un actionneur électromécanique (18) sur la base des données de commande par le processeur (14), dans lequel le procédé comprend en outre, avant l'étape a), l'étape suivante :
- exécuter un processus d'apprentissage comprenant l'exécution répétée d'une opération d'apprentissage (100) avec une pluralité de sujets (102), dans lequel, à chaque opération d'apprentissage (100) avec l'un de la pluralité de sujets (102), les étapes suivantes sont exécutées :
• placer le sujet (102) sur un dispositif d'assise (110),
• entrer des données de paramètres personnels prédéterminées (104) du sujet (102) dans un système d'apprentissage (108), dans lequel les données de paramètres personnels déterminées à partir des données de paramètres de siège sont choisies parmi la taille, le poids et le sexe du sujet,
• détecter des données de paramètres d'assise prédéterminées (106) du sujet (102) par au moins un élément de capteur (112a, 112b),
• transmettre les données de paramètres d'assise (106) au système d'apprentissage (108), et
• établir une corrélation entre les données de paramètres d'assise (106) et les données de paramètres personnels (104) du sujet (102) par le système d'apprentissage (108),
dans lequel, à l'étape c), le processeur (14) détermine les données de paramètres personnels de la personne à partir les données de paramètres de siège en utilisant le système d'apprentissage (108).

7. Procédé selon la revendication 6,
dans lequel ledit au moins un actionneur électromécanique (18) régule au moins un paramètre de posture du dispositif d'assise (10).

8. Procédé selon l'une des revendications 6 et 7,
dans lequel le dispositif d'assise (10) est un siège de bureau.

9. Procédé selon l'une des revendications 6 à 8,
dans lequel le dispositif d'assise (10) comprend une pluralité d'éléments de capteur (12a, 12b) disposés notamment dans une assise et/ou un dossier du dispositif d'assise (10).

10. Procédé selon l'une des revendications 6 à 9,
dans lequel le processeur (14) est en outre agencé pour commander des réglages de dispositifs disposés dans l'environnement du dispositif d'assise (10).
